# EUROPEAN PATENT APPLICATION

(11) **EP 4 696 827 A1**
(43) Date of publication of application: **18.02.2026**
(21) Application number: 24788252.5
(22) Date of filing: 15.04.2024
(51) Int. Cl.: D06F 33/30, D06F 34/04, D06F 34/32

(54) **CONTROL METHOD AND APPARATUS FOR LAUNDRY DEVICE, AND LAUNDRY DEVICE AND STORAGE MEDIUM**

(30) Priority: 13.04.2023 CN 202310417145
(71) Applicant: Hefei Haier Washing Machine Co., Ltd., Hefei, Anhui 230601 (CN); HAIER SMART HOME CO., LTD., Qingdao, Shandong 266101 (CN)
(72) Inventor: XIAO, Yunxuan, Qingdao, Shandong 266101 (CN); WANG, Kunfei, Qingdao, Shandong 266101 (CN); GAO, Qiuying, Qingdao, Shandong 266101 (CN); QI, Chunsheng, Qingdao, Shandong 266101 (CN); WANG, Liming, Qingdao, Shandong 266101 (CN); WEI, Tiesheng, Qingdao, Shandong 266101 (CN); ZHANG, Yuxue, Qingdao, Shandong 266101 (CN); GUO, Fengna, Qingdao, Shandong 266101 (CN)
(74) Representative: Linage González, Rafael
(86) International application number: PCT/CN2024/087707
(87) International publication number: WO 2024/213157

(57) **Abstract**

A control method and apparatus for a laundry device, a laundry device and a storage medium. The method includes: in response to sensing a touch operation of a user through a touch bar, sending an operation type corresponding to the touch operation to a controller, where the operation type includes: a single tap, a double tap, and sliding; determining a touch instruction corresponding to the operation type through the controller; determining current operation content of the user according to the touch instruction, and displaying the current operation content of the user on a non-touch screen; and in response to the current operation content being target operation content of the user, controlling a laundry device to process a cloth according to the target operation content. Sensing an operation of a user through a touch bar and presenting the operation of the user through a non-touch screen enable the user to control a laundry device in a simple and convenient way through the touch bar, thereby achieving low manufacturing costs and improving the user experience.

## Description

This application claims priority to Chinese Patent Application No. 202310417145.0 filed on Apr. 13, 2023, the disclosure of which is incorporated herein by reference in its entirety.

### Technical field

The present application relates to intelligent electric appliances, for example, a control method and apparatus for a laundry device, a laundry device and a storage medium.

### Background

Nowadays, intelligent washing machines have become a common household appliance in people's daily lives. The intelligent washing machines free users from manual laundry tasks and enhance their quality of life.

In the related art, the washing machines primarily rely on components such as buttons and knobs to allow users to control the washing machines. Alternatively, more advanced intelligent washing machines may be equipped with touch screens to allow users to control the washing machines through the touch screens. However, the components such as buttons and knobs are not intuitive or simple enough to use, preventing users from directly visualizing their operations. Although the touch screens can show operations to users, the touch screens come with high manufacturing costs and significant expenses.

### Summary

Embodiments of the present application provide a control method and apparatus for a laundry device, a laundry device and a storage medium, which can visualize the operations of users through a touch bar and a non-touch screen, thereby providing an extremely simple and convenient operation manner for the users and achieving low manufacturing costs and low expenses.

In a first aspect, the present application provides a control method for a laundry device. The method is applied to the laundry device, and the laundry device at least includes a touch bar, a non-touch screen, and a controller. The method includes the following steps.

In response to sensing a touch operation of a user through the touch bar, an operation type corresponding to the touch operation is sent to the controller, where the operation type includes: a single tap, a double tap, and sliding.

A touch instruction corresponding to the operation type is determined through the controller.

Current operation content of the user is determined according to the touch instruction, and the current operation content of the user is displayed on the non-touch screen.

In response to the current operation content being target operation content of the user, the laundry device is controlled to process a cloth according to the target operation content.

In a second aspect, the present application provides a control apparatus for a laundry device. The apparatus includes a sending module, a determination module, a display module, and a control module.

The sending module is configured to, in response to sensing a touch operation of a user through a touch bar, send an operation type corresponding to the touch operation to a controller, where the operation type includes: a single tap, a double tap, and sliding.

The determination module is configured to determine a touch instruction corresponding to the operation type through the controller.

The display module is configured to determine current operation content of the user according to the touch instruction and display the current operation content of the user on a non-touch screen.

The control module is configured to, in response to the current operation content being target operation content of the user, control the laundry device to process a cloth according to the target operation content.

In a third aspect, the present application further provides a laundry device. The laundry device includes a memory, a processor, and a computer program stored in the memory and executable on the processor, where when executing the program, the processor performs the control method for a laundry device described in any embodiment of the present application.

In a fourth aspect, the present application further provides a computer-readable storage medium. The computer-readable storage medium has a computer program stored thereon, where when executing the program, a processor performs the control method for a laundry device described in any embodiment of the present application.

### Brief Description of Drawings

FIG. 1 is a first flowchart of a control method for a laundry device according to the present application;
FIG. 2 is a schematic diagram of a touch bar in the laundry device according to the present application;
FIG. 3 is a second flowchart of a control method for a laundry device according to the present application;
FIG. 4 is a structure diagram of a control apparatus for a laundry device according to the present application; and
FIG. 5 is a structure diagram of a laundry device according to the present application.

### Detailed Description

The present application is further described in detail below in conjunction with drawings and embodiments. It is to be understood that the embodiments described herein are intended to illustrate the present application and not to limit the present application. Additionally, it is further to be noted that for ease of description, only part, not all, of the structures related to the present application are illustrated in the drawings.

To make the technical solutions of the present application better understood by those skilled in the art, the technical solutions of embodiments of the present application are described hereinafter clearly and completely in conjunction with the drawings in the embodiments of the present application. Apparently, the embodiments described hereinafter are part, not all, of the embodiments of the present application. Based on the embodiments of the present application, all other embodiments obtained by those of ordinary skill in the art without any creative efforts are within the scope of the present application.

It is to be noted that the terms such as "first" and "second" in the specification, claims, and above drawings of the present application are used for distinguishing between similar objects and are not necessarily used for describing a particular order or sequence. It is to be understood that the data used in this manner are interchangeable where appropriate so that the embodiments of the present application described herein can be implemented in an order not illustrated or described herein. Additionally, the terms "including", "having", and any variations thereof are intended to encompass a non-exclusive inclusion. For example, a process, method, system, product, or device that includes a series of steps or units not only includes the expressly listed steps or units but may also include other steps or units that are not expressly listed or are inherent to the process, method, product, or device.

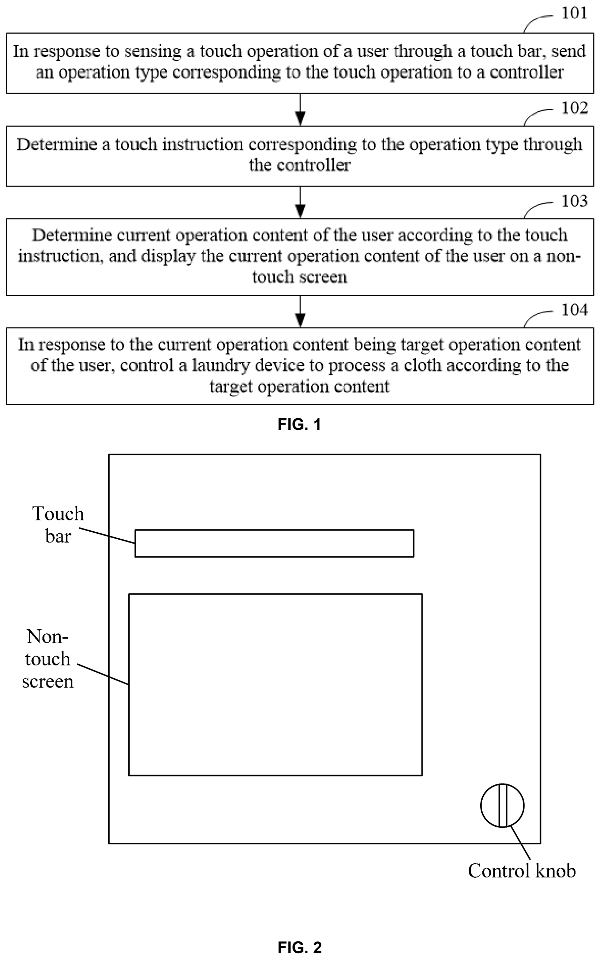

FIG. 1 is a first flowchart of a control method for a laundry device according to the present application. The method of the present application is applicable to the scenario of controlling an intelligent electric appliance. The method may be performed by a control apparatus for a laundry device provided by the present application, and the apparatus may be implemented in at least one of software or hardware. In an embodiment, the apparatus may be integrated into a laundry device. The apparatus being integrated in a laundry device is illustrated in the following embodiments as an example. Referring to FIG. 1, the method may specifically include steps S101 to S104.

In S101, in response to sensing a touch operation of a user through a touch bar, an operation type corresponding to the touch operation is sent to a controller.

The operation type includes: a single tap, a double tap, and sliding. The touch bar is a strip-shaped touch screen capable of receiving the touch operation of the user. With an extremely small area, the touch bar only supports simple gesture operations such as a double tap, a single tap, and sliding along the left-right direction, thereby resulting in very low manufacturing costs. FIG. 2 is a schematic diagram of a touch bar in the laundry device according to the present application. As shown in FIG. 2, the laundry device includes a control knob, a non-touch screen, and a touch bar, and the touch bar is located above the non-touch screen.

When the user touches the touch bar, the touch bar may sense the touch operation of the user, determine the operation type of the touch operation according to the touch operation, and send the operation type to the controller. For example, if the user taps once at any position on the touch bar, the touch bar may sense the touch operation of the user and determine that the operation type is a single tap according to the duration when the user touches the touch bar. If the user taps twice consecutively at any position on the touch bar, the touch bar may determine that the operation type is a double tap according to the duration when the user touches the touch bar twice and the time interval between the two touches. If the user slides left or right on the touch bar, the touch bar may determine that the operation type is sliding according to the distance of the sliding gesture of the user on the touch bar.

In S102, a touch instruction corresponding to the operation type is determined through the controller.

The touch instruction is determined by the controller, and the touch instruction is an instruction for controlling the non-touch screen or the laundry device. In an optional embodiment, the touch instructions corresponding to multiple operation types are pre-stored in the controller. When the controller receives the operation type of the touch operation of the user, the controller may match the operation instruction with the pre-stored touch instructions corresponding to the multiple operation types and then determine the touch instruction corresponding to the operation type.

In the embodiments of the solutions, when the operation type is the single tap, it is determine that the touch instruction is to select a current program, where the current program is a to-be-operated program among the programs displayed by the non-touch screen; when the operation type is the double tap, it is determine that the touch instruction is to execute the current program; when the operation type is the sliding, it is determine that the touch instruction is to switch the current program.

In S103, current operation content of the user is determined according to the touch instruction, and the current operation content of the user is displayed on the non-touch screen.

The operation content refers to the content which is determined by the controller according to the touch instruction and needs to be displayed on the non-touch screen. In an embodiment, when the touch instruction is to select the current program, the non-touch screen is controlled to display program information of the current program; when the touch instruction is to switch the current program, the non-touch screen is controlled to switch a page displaying the current program to a page displaying a next program of the current program or a page displaying a previous program of the current program.

In S104, in response to the current operation content being target operation content of the user, the laundry device is controlled to process a cloth according to the target operation content.

The target operation content is the operation content that is finally selected by the user through the touch bar and is used for instructing the laundry device to start working. In the embodiments of the solutions, when the touch instruction is to execute the current program, it is determined that the current operation content of the user is the target operation content.

In an embodiment, when the user needs to use the laundry device for rinsing clothes, the user may activate the laundry device by long-pressing the touch bar. The non-touch display screen then shows an initialization interface indicating the startup of the laundry device to the user. The initialization interface displays multiple programs of the laundry device, such as standard wash, rinse, large item wash, and mixed wash. Standard Wash is selected by default on the initialization interface, and the user may slide left or right to select other programs. Assuming the user slides left to select the Rinse program, after selecting the Rinse program, the user may enable the non-touch screen to display information associated with the Rinse program through a single tap on the touch bar, such as the rinse duration, the drum rotation speed, and water temperature. If the user confirms the Rinse operation, the user may double-tap the touch bar. After identifying that the user double-taps the touch bar, the controller may determine that the touch instruction is to execute the current program. In an embodiment, the controller may determine the current operation content as the target operation content of the user and control the laundry device to initiate the rinsing process.

In the solutions of the embodiments, when the touch operation of the user is sensed through the touch bar, the operation type corresponding to the touch operation is sent to the controller, where the operation type includes a single tap, a double tap or sliding; the touch instruction corresponding to the operation type is determined through the controller; the current operation content of the user is determined according to the touch instruction, and the current operation content of the user is displayed on the non-touch screen; and when the current operation content is the target operation content of the user, the laundry device is controlled to process the cloth according to the target operation content. In the solutions of the embodiments, the operation of the user may not only be sensed through the touch bar but also displayed through the non-touch screen so that the user may control the laundry device in a simple and convenient way to process clothes through the touch bar, thereby achieving low manufacturing costs and expenses and improving the user experience.

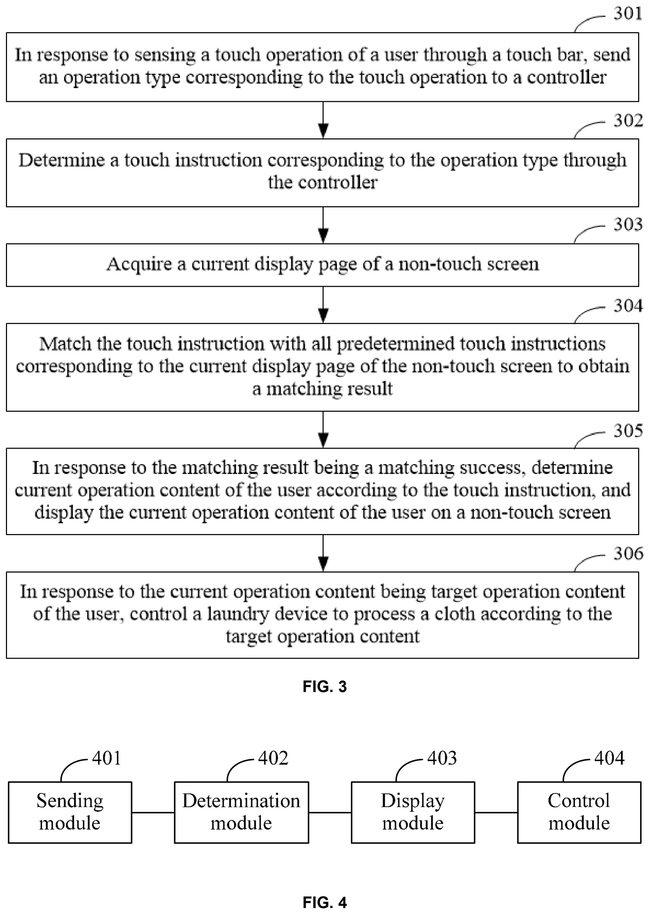

FIG. 3 is another flowchart of a control method for a laundry device according to the present application. Specifically, as shown in FIG. 3, the method may include steps S301 to S306.

In S301, in response to sensing a touch operation of a user through a touch bar, an operation type corresponding to the touch operation is sent to a controller.

The operation type includes a single tap, a double tap or sliding.

In S302, a touch instruction corresponding to the operation type is determined through the controller.

In an embodiment, the touch instructions corresponding to multiple operation types are pre-stored in the controller. When the controller receives the operation type of the touch operation of the user, the controller may match the operation instruction with the pre-stored touch instructions corresponding to the multiple operation types and then determine the touch instruction corresponding to the operation type. In the embodiments of the solutions, when the operation type is the single tap, it is determine that the touch instruction is to select a current program; when the operation type is the double tap, it is determine that the touch instruction is to execute the current program; when the operation type is the sliding, it is determine that the touch instruction is to switch the current program.

The current program is a to-be-operated program among the programs displayed by the non-touch screen. When the touch instruction is to select the current program, it indicates that the user needs to select the current program and view the program information of the current program. When the touch instruction is to switch current program, it indicates that the user needs to view the previous program or the next program of the current program. In the embodiments of the solutions, the operation type further includes a long press, and when the operation type is the long press, a current operating state of the laundry device is adjusted through the controller.

The operating state of the laundry device includes a power-off state, a standby state, a running state, and an adjustment state. In an embodiment, when the duration when the user touches or presses the touch bar exceeds a first preset duration but does not exceed a second preset duration, it is determined according to the touch operation of the user that the operation type is the long press. When the operation type is the long press, it indicates that the user needs to adjust the current operating state of the laundry device.

In the embodiments of the solutions, the step where the current operating state of the laundry device is adjusted through the controller includes: when the current operating state of the laundry device is the power-off state, the current operating state of the laundry device is adjusted to the standby state; when the current operating state of the laundry device is the running state, the current operating state of the laundry device is adjusted to the pause state; when the current operating state of the laundry device is the standby state, the current operating state of the laundry device is adjusted to the power-off state.

The standby state refers to the state where the laundry device is powered on but no program is executed. The running state refers to the state where the laundry device is running a preset program. For example, when the laundry device is connected to power but in the powered-off state, the controller of the laundry device remains in a normal operating state. When the user long-touches any position on the touch bar, the controller may determine the operation type as the long press according to the touch operation of the user, and accordingly, the controller may switch the laundry device from the power-off state to the standby state.

For example, when the laundry device is washing clothes for the user, if the touch bar senses the touch operation of the user and the operation type is the long press, the controller may control the laundry device to pause the washing. When the laundry device is powered on but is not running any program, that is, the laundry device is in the standby state, if the touch bar senses the touch operation of the user and the operation type is the long press, the controller may power off the laundry device.

In the above steps, the touch instruction corresponding to the touch operation may be accurately determined through the controller, thereby laying a foundation for the laundry device to provide services that satisfy the needs of the user according to the touch instruction and improving the user experience.

In S303, a current display page of the non-touch screen is acquired.

The current display page is the page which the non-touch screen is presenting to the user. For example, when the laundry device is washing clothes, the non-touch screen may display a page showing relevant information about the washing, such as the washing progress and the washing duration. When the laundry device is in the standby state and the user has selected a washing program, the current display page on the non-touch screen may present various parameters of the washing program, such as the amount of the added laundry detergent and the washing water temperature.

In an embodiment, when the controller determines the touch instruction corresponding to the operation type, the controller may acquire the current display page of the non-touch screen to determine whether the non-touch screen is capable of adjusting the current display page according to the touch instruction of the user.

In S304, the touch instruction is matched with all predetermined touch instructions corresponding to the current display page of the non-touch screen to obtain a matching result.

In an embodiment, the touch instruction corresponding to each display page of the non-touch screen is stored in the controller. When the controller determines the touch instruction corresponding to the operation type, the controller may match the touch instruction with all the touch instructions corresponding to the current display page and obtain a matching result.

In an embodiment, the laundry device is in the standby state, and the current display page of the non-touch screen is showing the user programs that the laundry device can support, such as wash, rinse, standard wash, and the like. The controller may determine, according to the current display page, that the touch instruction corresponding to the current display page is to switch the current program or to select the current program. When the touch instruction of the user is to execute the current program, it may be determined that the matching result is a matching failure. When the touch instruction of the user is to switch the current program or to select the current program, it may be determined that the matching result is a matching success.

In S305, in response to the matching result being a matching success, a current operation content of the user is determined according to the touch instruction, and the current operation content of the user is displayed on the non-touch screen.

The operation content refers to the content which is determined by the controller according to the touch instruction and needs to be displayed on the non-touch screen. In the embodiments of the solutions, when the touch instruction is to select the current program, the non-touch screen is controlled to display program information of the current program. When the touch instruction is to switch the current program, the non-touch screen is controlled to switch a page displaying the current program to a page displaying a next program of the current program or a page displaying a previous program of the current program.

The program information includes information such as selection parameters corresponding to the program and sub-program items included in the program. When the touch instruction is to select the current program, it indicates that the user needs to view the program information of the current program, and then the non-touch screen may display the program information of the current program. When the touch instruction is to switch the current program, it indicates that the user needs to view the previous program or the next program of the current program, and then the controller may control the non-touch screen to switch the page displaying the current program to the page displaying the next program of the current program or the page displaying the previous program of the current program.

For example, the laundry device is in the standby state, and the non-touch screen shows the user programs supported by the laundry device, such as standard Wash, rinse, spin, mix wash, mite removal, and the like. Assuming the current display page is the display page of standard wash, if the user slides left on the touch bar, the controller may determine that the touch instruction is to switch the current program. The controller may determine, according to the slide direction along which the user slides on the touch bar, that the user needs to view the next program of the current program, and then control the non-touch screen to switch the current display page to the page displaying the Rinse program.

In the above steps, the laundry device may display the current operation content of the user on the non-touch screen according to the matching result of the touch instruction, thereby visualizing the touch operation of the user, avoiding the occurrence of a situation where the user accidentally touches the touch bar, and improving the user experience.

In S306, in response to the current operation content being target operation content of the user, the laundry device is controlled to process a cloth according to the target operation content.

In the embodiments, when the touch operation of the user is sensed through the touch bar, the operation type corresponding to the touch operation is sent to the controller, where the operation type includes a single tap, a double tap or sliding; the touch instruction corresponding to the operation type is determined through the controller; the current display page of the non-touch screen is acquired; the touch instruction is matched with all predetermined touch instructions corresponding to the current display page of the non-touch screen to obtain the matching result; when the matching result is a matching success, the current operation content of the user is determined according to the touch instruction, and the current operation content of the user is displayed on the non-touch screen; and when the current operation content is the target operation content of the user, the laundry device is controlled to process the cloth according to the target operation content. In the solutions of the embodiments, the operation of the user may not only be sensed through the touch bar but also displayed through the non-touch screen so that the user may control the laundry device in a simple and convenient way to process clothes through the touch bar, thereby achieving low manufacturing costs and expenses and improving the user experience.

FIG. 4 is a structure diagram of a control apparatus for a laundry device according to the present application. The apparatus is suitable for executing the control method for a laundry device provided by the present application. As shown in FIG. 4, the apparatus may specifically include a sending module 401, a determination module 402, a display module 403, and a control module 404.

The sending module 401 is configured to, in response to sensing a touch operation of a user through a touch bar, send an operation type corresponding to the touch operation to a controller, where the operation type includes: a single tap, a double tap, and sliding.

The determination module 402 is configured to determine a touch instruction corresponding to the operation type through the controller.

The display module 403 is configured to determine current operation content of the user according to the touch instruction and display the current operation content of the user on a non-touch screen.

The control module 404 is configured to, in response to the current operation content being target operation content of the user, control the laundry device to process a cloth according to the target operation content.

In an embodiment, the determination module 402 is specifically configured to, in response to the operation type being the single tap, determine that the touch instruction is to select a current program, where the current program is a to-be-operated program among programs displayed by the non-touch screen;
in response to the operation type being the double tap, determine that the touch instruction is to execute the current program; and
in response to the operation type being the sliding, determine that the touch instruction is to switch the current program.

The display module 403 is specifically configured to, in response to the touch instruction being to execute the current program, determine that the current operation content of the user is the target operation content.

In an embodiment, the determination module 402 is further configured to, in response to the touch instruction being to select the current program, control the non-touch screen to display program information of the current program; and
in response to the touch instruction being to switch the current program, control the non-touch screen to switch a page displaying the current program to a page displaying a next program of the current program or a page displaying a previous program of the current program.

In an embodiment, the display module 403 is further configured to acquire a current display page of the non-touch screen;
match the touch instruction with all predetermined touch instructions corresponding to the current display page of the non-touch screen to obtain a matching result; and
in response to the matching result being a matching success, perform steps of determining the current operation content of the user according to the touch instruction and displaying the current operation content of the user on the non-touch screen.

The operation type further includes a long press, and the control module 404 is specifically configured to, in response to the operation type being the long press, adjust a current operating state of the laundry device through the controller.

The control module 404 is further configured to, in response to the current operating state of the laundry device being a power-off state, adjust the current operating state of the laundry device to a standby state;
in response to the current operating state of the laundry device being a running state, adjust the current operating state of the laundry device to a pause state; and
in response to the current operating state of the laundry device being the standby state, adjust the current operating state of the laundry device to the power-off state.

The control apparatus for a laundry device provided by the present application may perform the control method for a laundry device provided by any embodiment of the present application and has functional modules and beneficial effects corresponding to the performed method. For the content that is not described in detail in the embodiments, reference may be made to the description in any method embodiment of the present application.

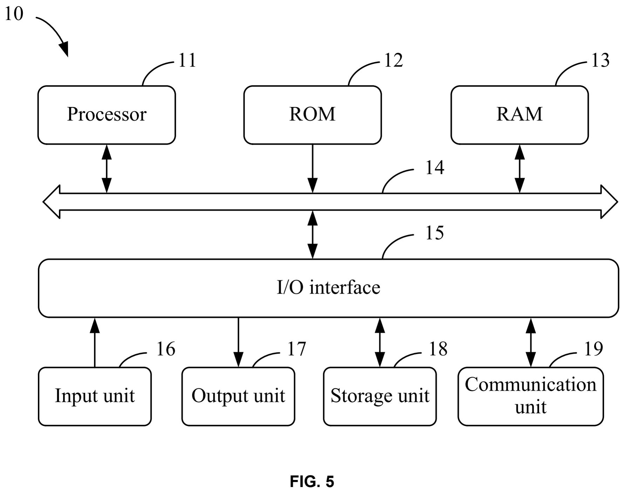

FIG. 5 is a structure diagram of a laundry device according to the present application. FIG. 5 shows the structure diagram of a laundry device 10 that may be used for implementing the embodiments of the present application. The laundry device is intended to represent various kinds of digital computers such as laptop computers, desktop computers, worktables, personal digital assistants, servers, blade servers, mainframe computers, and other suitable computers. The laundry device may further represent various kinds of mobile apparatuses, such as personal digital assistants, cellular telephones, smart phones, wearable devices (such as helmets, glasses, and watches), and other similar computing apparatuses. The components shown here, their connections and relationships, and their functions, are meant to be exemplary only, and are not meant to limit implementations of the present application described and/or claimed here.

As shown in FIG. 5, the laundry device 10 includes at least one processor 11 and a memory that is communicatively connected to the at least one processor 11, such as a read-only memory (ROM) 12 and a random-access memory (RAM) 13. The memory stores a computer program that can be executed by the at least one processor. The processor 11 may perform various kinds of suitable actions and processing according to a computer program stored in the ROM 12 or a computer program loaded into the RAM 13 from a storage unit 18. In the RAM 13, various kinds of programs and data needed for the operations of the laundry device 10 may also be stored. The processor 11, the ROM 12, and the RAM 13 are connected to each other via a bus 14. An input/output (I/O) interface 15 is also connected to the bus 14.

Various components in the laundry device 10 are connected to the I/O interface 15, including an input unit 16 such as a keyboard and a mouse; an output unit 17 such as various kinds of displays and loudspeakers; the storage unit 18 such as a magnetic disk or an optical disc; and a communication unit 19 such as a network card, a modem, and a wireless communication transceiver. The communication unit 19 allows the laundry device 10 to exchange information/data with other devices through a computer network such as the Internet and/or a variety of telecommunication networks.

The processor 11 may be various kinds of general-purpose and/or special-purpose processing components that have processing and computing capabilities. Examples of the processor 11 include, but are not limited to, a central processing unit (CPU), a graphics processing unit (GPU), various kinds of special-purpose artificial intelligence (AI) computing chips, various kinds of processors running machine learning model algorithms, a digital signal processor (DSP), and any suitable processors, controllers, microcontrollers, and the like. The processor 11 performs various methods and processing described above, such as the control method for a laundry device.

In some embodiments, the control method for a laundry device may be implemented as a computer program tangibly embodied on a computer-readable storage medium, for example, the storage unit 18. In some embodiments, all or a portion of the computer program may be loaded and/or installed in the laundry device 10 via the ROM 12 and/or the communication unit 19. When the computer program is loaded into the RAM 13 and executed by the processor 11, the computer program may perform one or more steps of the control method for a laundry device described above. Alternatively, in other embodiments, the processor 11 may be configured to execute the control method for a laundry device by any other suitable means (for example, by means of firmware).

Various implementations of the systems and techniques described above may be implemented in a digital electronic circuit system, an integrated circuit system, a field-programmable gate array (FPGA), an application-specific integrated circuit (ASIC), an application-specific standard product (ASSP), a system on a chip (SOC), a complex programmable logic device (CPLD), computer hardware, firmware, software, and/or combinations thereof. These various implementations may include implementations in one or more computer programs that are executable and/or interpretable on a programmable system including at least one programmable processor, which may be special-purpose or general-purpose and configured to receive data and instructions from, and to transmit data and instructions to, a storage system, at least one input apparatus, and at least one output apparatus.

The computer program for performing the method of the present application may be written in any combination of one or more programming languages. These computer programs may be provided for a processor of a general-purpose computer, a special-purpose computer or other programmable data processing apparatuses such that the computer programs, when executed by the processor, cause the functions/operations specified in the flowcharts and/or block diagrams to be implemented. The computer programs may execute entirely on one machine, partly on the machine, as a stand-alone software package, partly on the machine and partly on a remote machine, or entirely on the remote computer or a server.

In the context of the present application, a computer-readable storage medium may be any tangible medium that can contain or store a computer program for use by or in connection with an instruction execution system, apparatus, or device. The computer-readable storage medium may be, but is not limited to, an electronic, magnetic, optical, electromagnetic, infrared, or semiconductor system, apparatus, or device, or any suitable combination thereof. Alternatively, the computer-readable storage medium may be a machine-readable signal medium. Concrete examples of the machine-readable storage medium may include an electrical connection based on one or more wires, a portable computer disk, a hard disk, a RAM, a ROM, an erasable programmable read-only memory (EPROM) or a flash memory, an optical fiber, a portable compact disc read-only memory (CD-ROM), an optical storage device, a magnetic storage device, or any suitable combination thereof.

To provide for interaction with a user, the systems and techniques described here may be implemented on a laundry device having a display apparatus (for example, a cathode ray tube (CRT) or liquid crystal display (LCD) monitor) for displaying information to the user as well as a keyboard and a pointing apparatus (for example, a mouse or a trackball) by which the user can provide input to the laundry device. Other kinds of apparatuses may be used to provide for interaction with a user as well; for example, feedback provided for the user can be any form of sensory feedback (for example, visual feedback, auditory feedback, or tactile feedback); and input from the user can be received in any form (including acoustic input, speech input, or tactile input).

The systems and techniques described here may be implemented in a computing system that includes a back end component (for example, as a data server), a computing system that includes a middleware component (for example, an application server), a computing system that includes a front end component (for example, a client computer having a graphical user interface or a Web browser through which a user can interact with an implementation of the systems and techniques described here), or a computing system that includes any combination of such back end, middleware, or front end components. The components of the system may be interconnected by any form or medium of digital data communication (for example, a communication network). Examples of the communication network include a local area network (LAN), a wide area network (WAN), a blockchain network, and the Internet.

The computing system may include a client and a server. The client and the server are generally remote from each other and typically interact through a communication network. The relationship of the client and the server arises by virtue of computer programs running on the respective computers and having a client-server relationship with each other. The server may be a cloud server, also referred to as a cloud computing server or a cloud host. As a host product in a cloud computing service system, the server solves the defects of difficult management and poor service scalability in the service of a conventional physical host and a relevant virtual private server (VPS).

It is to be understood that various forms of processes shown above may be adopted with steps reordered, added, or deleted. For example, the steps described in the present application may be performed in parallel, sequentially or in different sequences, as long as the desired results of the technical solutions of the present application can be achieved, and no limitation is imposed herein.

## Claims

1. A control method for a laundry device, applied to the laundry device, the laundry device at least comprising a touch bar, a non-touch screen, and a controller, the method comprising:
in response to sensing a touch operation of a user through the touch bar, sending an operation type corresponding to the touch operation to the controller, wherein the operation type comprises: a single tap, a double tap, and sliding;
determining a touch instruction corresponding to the operation type through the controller;
determining current operation content of the user according to the touch instruction, and displaying the current operation content of the user on the non-touch screen; and
in response to the current operation content being target operation content of the user, controlling the laundry device to process a cloth according to the target operation content.

2. The method according to claim 1, wherein determining the touch instruction corresponding to the operation type through the controller comprises:
in response to the operation type being the single tap, determining that the touch instruction is to select a current program; wherein the current program is a to-be-operated program among programs displayed by the non-touch screen;
in response to the operation type being the double tap, determining that the touch instruction is to execute the current program; and
in response to the operation type being the sliding, determining that the touch instruction is to switch the current program.

3. The method according to claim 1, wherein determining the current operation content of the user according to the touch instruction comprises:
in response to the touch instruction being to execute a current program, determining that the current operation content of the user is the target operation content.

4. The method according to claim 2, wherein controlling the non-touch screen to display an operation content corresponding to the touch instruction comprises:
in response to the touch instruction being to select the current program, controlling the non-touch screen to display program information of the current program; and
in response to the touch instruction being to switch the current program, controlling the non-touch screen to switch a page displaying the current program to a page displaying a next program of the current program or a page displaying a previous program of the current program.

5. The method according to claim 1, before determining the current operation content of the user according to the touch instruction, further comprising:
acquiring a current display page of the non-touch screen;
matching the touch instruction with all predetermined touch instructions corresponding to the current display page of the non-touch screen to obtain a matching result; and
in response to the matching result being a matching success, performing steps of determining the current operation content of the user according to the touch instruction and displaying the current operation content of the user on the non-touch screen.

6. The method according to claim 3, wherein the operation type further comprises a long press, and the method further comprises: in response to the operation type being the long press, adjusting a current operating state of the laundry device through the controller.

7. The method according to claim 6, wherein adjusting the current operating state of the laundry device through the controller comprises:
in response to the current operating state of the laundry device being a power-off state, adjusting the current operating state of the laundry device to a standby state;
in response to the current operating state of the laundry device being a running state, adjusting the current operating state of the laundry device to a pause state; and
in response to the current operating state of the laundry device being the standby state, adjusting the current operating state of the laundry device to the power-off state.

8. A control apparatus for a laundry device, comprising:
a sending module configured to, in response to sensing a touch operation of a user through a touch bar, send an operation type corresponding to the touch operation to a controller, wherein the operation type comprises: a single tap, a double tap, and sliding;
a determination module configured to determine a touch instruction corresponding to the operation type through the controller;
a display module configured to determine current operation content of the user according to the touch instruction and display the current operation content of the user on a non-touch screen; and
a control module configured to, in response to the current operation content being target operation content of the user, control the laundry device to process a cloth according to the target operation content.

9. A laundry device, comprising a memory, a processor, and a computer program stored in the memory and executable on the processor, wherein when executing the program, the processor performs the control method for a laundry device according to any one of claims 1 to 7.

10. A computer-readable storage medium having a computer program stored thereon, wherein when executing the computer program, a processor performs the control method for a laundry device according to any one of claims 1 to 7.
